# EUROPEAN PATENT SPECIFICATION

(11) **EP 3 254 898 B1**
(45) Date of publication and mention of the grant of the patent: **08.05.2019**
(21) Application number: 16746298.5
(22) Date of filing: 28.01.2016
(51) Int. Cl.: B60R 1/00, B60R 1/04, B60R 11/02, H04N 7/18

(54) **ELECTRONIC MIRROR DEVICE AND ELECTRONIC MIRROR SYSTEM USING SAME**
ELEKTRONISCHE SPIEGELVORRICHTUNG UND ELEKTRONISCHES SPIEGELSYSTEM DAMIT
DISPOSITIF DE MIROIR ÉLECTRONIQUE ET SYSTÈME DE MIROIR ÉLECTRONIQUE UTILISANT CE DERNIER

(30) Priority: 02.02.2015 JP 2015018074
(43) Date of publication of application: 13.12.2017
(73) Proprietor: Panasonic Intellectual Property Management Co., Ltd., Osaka-shi, Osaka 540-6207 (JP)
(72) Inventor: HASEGAWA, Yusuke, Osaka-shi, Osaka 540-6207 (JP); MATSUMOTO, Yuji, Osaka-shi, Osaka 540-6207 (JP)
(74) Representative: SSM Sandmair
(86) International application number: PCT/JP2016/000426
(87) International publication number: WO 2016/125465

(56) References cited:
- EP-A1- 2 789 505
- WO-A1-2013/176166
- JP-A- 2005 132 148
- JP-A- 2007 203 945
- JP-A- 2010 018 050
- JP-A- 2010 208 372
- JP-A- 2014 015 198

## Description

### TECHNICAL FIELD

The present invention relates to electronic mirror apparatuses and electronic mirror systems equipped with the electronic mirror apparatuses. Each of the electronic mirror apparatuses is mounted in a vehicle, such as an automobile, for providing a driver with a rear view, and has an automatic antiglare function.

### BACKGROUND ART

Since long ago, a rearview mirror has been used as a means of checking a rearward direction of a vehicle such as an automobile during driving of the vehicle. The rearward direction is checked using the reflected image in the mirror. In recent years, as a substitution for such a rearview mirror, an electronic mirror has been devised which can display an image on a display monitor mounted in front of a driver with the image being shot with a camera mounted in a rear portion of a vehicle.

Patent Literature 1 is known to be an example of such an electronic mirror. FIG. 12 shows a configuration of a rearview mirror having a built-in monitor disclosed in Patent Literature 1. In the rearview mirror having the built-in monitor shown in FIG. 12, mirror 4 is fit in rearview mirror body 1, and liquid-crystal display monitor 5 is built in a part of the mirror. Monitor 5 can display an image that is shot with an outside vehicle camera. In a state of monitor 5 being turned OFF, mirror 4 is set at a usual operation angle at which a driver can view an image of vehicle's rear windshield, and a use of mirror 4 allows the driver to check the rearward direction through the rear windshield. When monitor 5 is turned ON, a signal is transferred to driving unit 7. The signal causes driving unit 7 to rotate rearview mirror body 1 to be at a glare-avoiding angle. With this rotation, a dark portion other than the rear windshield comes to be reflected in monitor 5 or mirror 4 surrounding monitor 5 when viewed from the driver. This allows the driver to view an image and the like being displayed on monitor 5, without being dazzled.

In cases where the vehicle is travelling in a dark ambient environment, such as at nighttime or in a tunnel, and intense light coming from headlights and the like of a following vehicle is reflected in the rearview mirror, the driver sometimes suffers from glare of the light, in viewing the mirror. The rearview mirror having the built-in monitor disclosed in Patent Literature 1 has a problem that the driver suffers from the glare as described above when monitor 5 is in a state of being turned OFF, that is, when the driver is checking the rearward direction using mirror 4. A means to solve such a problem is an electrochromic mirror described in Patent Literature 2.

The electrochromic mirror described in Patent Literature 2 employs electrochromic device 18 with variable reflectivity as shown in FIG. 13, instead of the usual mirror. The reflectivity of electrochromic device 18 is varied in response to the intensity of light incident from the rearward direction of the vehicle, thereby reducing glare of the light incident from the rearward direction.

Such a function of reducing the glare from which the driver suffers in viewing the mirror, as described above, is called an antiglare function.

WO 2013/176166 A1 describes a vehicle rearview mirror system according to the preamble of claim 1, having a configuration in which a display device is switched on or off in conjunction with a change in the orientation of a vehicle mirror main body when the mirror main body is configured so as to tilt between an orientation for the vehicle mirror main body when the driver looks in the rearward direction of the vehicle in the reflection in a semi-transparent mirror, and an orientation for the vehicle mirror main body when the driver looks at an image displayed on a display screen of a display device. This vehicle rearview mirror system has: a display device that constructs an image from an image signal output from an image reception unit of a vehicle-mounted camera and displays the image on a display screen; a vehicle mirror main body inside which the display device is incorporated; an operation lever member; and a power supply switch. The orientation of the vehicle mirror main body can be altered between an orientation in which the driver looks in the rearward direction of the vehicle in the reflection in a semi-transparent mirror, and an orientation in which the driver looks at the image displayed on the display screen of the display device. The operation lever member is used to alter the orientation of the vehicle mirror main body, and a power supply switch switches the display device on or off in conjunction with the operation of the operation lever member.

### Citation List

### Patent Literature

PTL 1: Japanese Patent Unexamined Publication No. 2002-120649
PTL 2: U.S. Patent Application Publication No. 2004/0047043
PTL 3: WO 2013/176166A1

### SUMMARY OF THE INVENTION

The present invention provides an electronic mirror apparatus and an electronic mirror system equipped with the electronic mirror apparatus. The electronic mirror apparatus having an automatic antiglare function is to be mounted in a vehicle to provide a driver of the vehicle with a rear view. The electronic mirror apparatus can provide the driver with a clear view without being dazzled, when the vehicle is travelling in a dark ambient environment, such as at nighttime or in a tunnel, and the vehicle is irradiated with intense light coming from headlights and the like of a following vehicle.

An electronic mirror apparatus according to one aspect of the present disclosure includes: a display unit having a display screen, a mirror disposed over the screen, a drive mechanism for changing an angle of the mirror, and a controller. The controller is electrically coupled with the display unit, the drive mechanism, an illuminance sensor for monitoring illuminance of light
incident from the rearward direction of the vehicle, and a camera for shooting an image in the rearward direction of the vehicle. The controller monitors the illuminance of the light incident from the rearward direction of the vehicle based on an output of the illuminance sensor when the display unit is in an OFF state and the vehicle is in a dark environment. The controller instructs the drive mechanism to adjust the angle of the mirror to an antiglare angle and also instructs the display unit to display the image shot by the camera on the display screen with the image being regulated in luminance when the illuminance of the light incident from the rearward direction of the vehicle becomes equal to or larger than a threshold value.

The configuration makes it possible to immediately change the angle of the mirror in response to intense light coming from headlights and the like of a following vehicle even when the driver is checking the rearward direction with the mirror, with the display unit being OFF, while the vehicle is travelling in a dark ambient environment, such as at nighttime or in a tunnel. Moreover, at this time, the display unit is turned ON to display the image after the image has been regulated in luminance in response to the illuminance of the incident light, thereby allowing a reduction in glare by which the driver is dazzled.

An electronic mirror system according to one aspect of the present disclosure includes: the electronic mirror apparatus described above, a camera, and an illuminance sensor.

The electronic mirror apparatus and the electronic mirror system, according to the present disclosure, are capable of providing the driver with a clear view without being dazzled, even in the environment in which the vehicle is irradiated with intense light coming from headlights and the like of a following vehicle.

### BRIEF DESCRIPTION OF DRAWINGS

FIG. 1 is a view of an electronic mirror apparatus according to the present disclosure, in a state of being mounted in a vehicle.
FIG. 2 is a cross-sectional view of an electronic mirror apparatus according to an embodiment.
FIG. 3 is a cross-sectional view of the electronic mirror apparatus according to the embodiment.
FIG. 4 is a front view of the electronic mirror apparatus according to the embodiment.
FIG. 5 is a rear view of the electronic mirror apparatus according to the embodiment.
FIG. 6A is a view of an electronic mirror system including the electronic mirror apparatus according to the embodiment.
FIG. 6B is a view of a controller of the electronic mirror system according to the embodiment.
FIG. 7 is an operation flow (Starting Phase) of the electronic mirror system according to the embodiment.
FIG. 8 is an operation flow (Determining Phase) of the electronic mirror system according to the embodiment.
FIG. 9 is an operation flow (Executing Phase) of the electronic mirror system according to the embodiment.
FIG. 10 is an operation flow of a camera of the electronic mirror system according to the embodiment.
FIG. 11 is an operation flow (Ending Phase) of the electronic mirror system according to the embodiment.

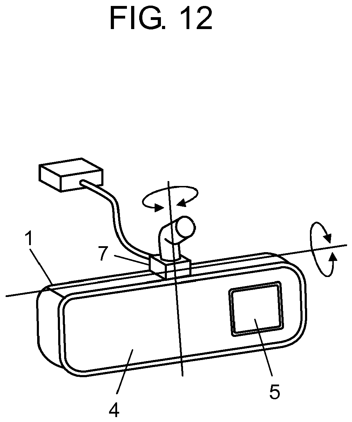

FIG. 12 is a view of a structure of a conventional rearview mirror having a built-in monitor.

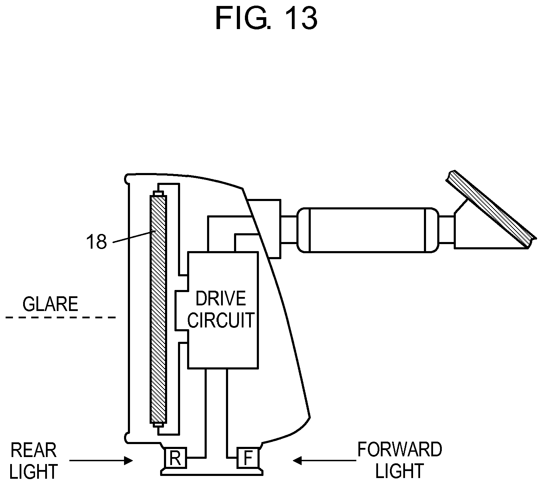

FIG. 13 is a view of a structure of a conventional electrochromic mirror.

### DESCRIPTION OF EMBODIMENT

Prior to descriptions of an embodiment of the present disclosure, a problem of conventional technologies will be briefly described. The electrochromic mirror described in Patent Literature 2 reduces its reflectivity when the mirror is irradiated with intense light incident from a rearward direction of a vehicle. Thus, the glare will be reduced but an image displayed on the mirror will become dark.

Hereinafter, an electronic mirror apparatus according to the embodiment of the present disclosure will be described with reference to the accompanying drawings.

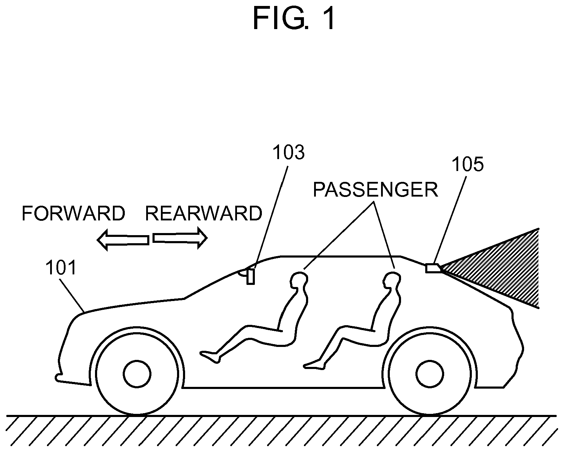

FIG. 1 is a view of vehicle 101 equipped with electronic mirror apparatus 103 according to the embodiment of the present disclosure. Electronic mirror apparatus 103 is mounted on a windshield of vehicle 101, and functions as a rearview mirror. Camera 105 is mounted on a rear part of vehicle 101 to shoot an image in a rearward direction of the vehicle. The image shot with camera 105 is transmitted, as an image signal, to electronic mirror apparatus 103. Electronic mirror apparatus 103 receives the image signal transmitted from camera 105, and displays the image shot in the rearward direction of the vehicle with camera 105. By visually recognizing the image displayed on electronic mirror apparatus 103, a driver of vehicle 101 can check a situation in the rearward direction of the vehicle. In this way, electronic mirror apparatus 103 provides the driver of vehicle 101 with the view in the rearward direction of the vehicle.

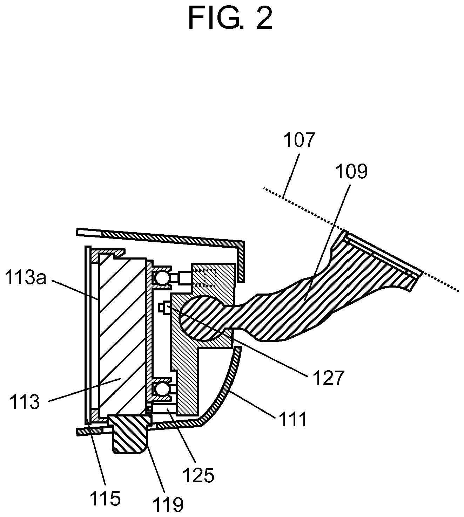

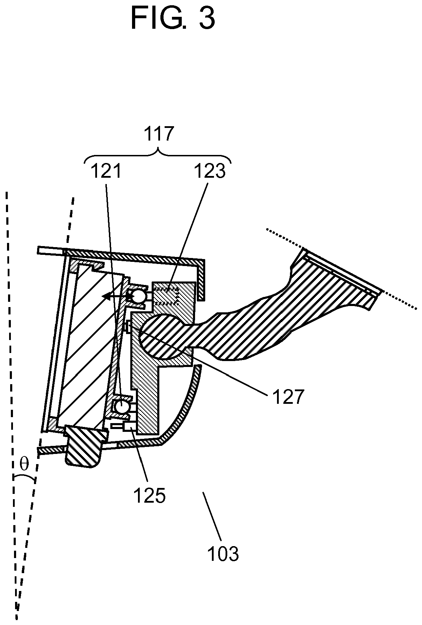

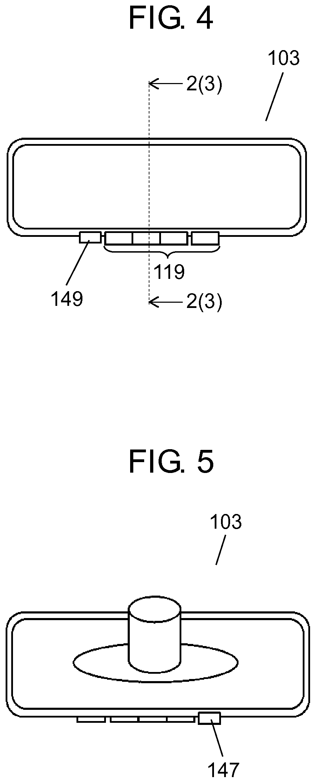

Next, with reference to FIGS. 2 to 5, electronic mirror apparatus 103 according to the embodiment will be described in detail. FIGS. 2 and 3 are cross-sectional views of electronic mirror apparatus 103 according to the embodiment. Moreover, FIGS. 4 and 5 are a front and a rear view of the apparatus, respectively. The cross-sectional views of FIGS. 2 and 3 are each taken along broken line 2 (3) to 2 (3) in FIG. 4.

As shown in FIG. 2, electronic mirror apparatus 103 according to the embodiment is mounted on the surface on the vehicle's interior side of windshield 107 of vehicle 101, via mounting arm 109. Electronic mirror apparatus 103 according to the embodiment includes: housing 111, display unit 113 disposed inside housing 111, mirror 115 disposed over display screen 113a of display unit 113, and drive mechanism 117 for changing an angle of mirror 115. Operation unit 119 is disposed in housing 111, with the operation unit being equipped with operation buttons with which the driver can operate electronic mirror apparatus 103. Display unit 113 employs a liquid crystal display (LCD) and the like, for example.

Here, an image is displayed on display screen 113a when display unit 113 is ON. No image is displayed on display screen 113a when display unit 113 is OFF. Mirror 115 is a semitransparent mirror. When display unit 113 is ON, the image displayed on display screen 113a can pass through mirror 115, which allows the driver to visually recognize the image. In contrast, when display unit 113 is OFF, mirror 115 acts as a reflecting surface which allows the driver to view an image reflected in mirror 115. Accordingly, the driver can view the image reflected in mirror 115 to check the rearward direction of the vehicle, in the same manner as for conventional rearview mirrors. The driver can switch between ON and OFF of display unit 113, through use of an operation button of operation unit 119. Moreover, in situations where the driver is viewing the image to check the rearward direction with display unit 113 being ON, even when something wrong abruptly turns display unit 113 OFF, the driver can continue to check the rearward direction by using mirror 115. This means that mirror 115 has a fail-safe function.

FIG. 2 shows a state of display unit 113 being OFF. In this state, the angle of mirror 115 is set such that, the driver can check the rearward direction of the vehicle through the rear windshield of the vehicle, by visually recognizing mirror 115. Hereinafter, when mirror 115 is at an angle at which the driver can check the rearward direction of the vehicle by using mirror 115, the angle of mirror 115 is referred to as an "initial position." Moreover, when the angle of mirror 115 is set at the initial position, the state of electronic mirror apparatus 103 is referred to as a "mirror mode."

On the other hand, FIG. 3 shows the state of display unit 113 being ON. In this state, the angle of mirror 115 is equal to antiglare angle θ which is different from that in the state of display unit 113 being OFF. In the present disclosure, antiglare angle θ represents a change in the angular position of the surface of mirror 115 from the initial position. Antiglare angle θ is set equal to an angle at which intense light incident from the rearward direction of the vehicle (e.g., coming from headlights of a following vehicle) is not reflected in mirror 115 when the driver visually recognizes the mirror. For example, the normal line to the surface of the mirror 115 is pointing more upward in FIG. 3 than in FIG. 2. In this state, when the driver views mirror 115, a ceiling of vehicle 101 is reflected in the mirror and, thus, the intense light incident from the rearward direction of the vehicle is not reflected in the mirror. In the embodiment, the angle of display screen 113a is also changed in conjunction with mirror 115. Nevertheless, since display unit 113 is a display, such as an LCD, that offers a wide viewing angle, changing the angle to some extent has no significant influence on the visual recognition, by the driver, of the image that is displayed on display screen 113a. Hereinafter, the state in which the angle of mirror 115 is set at antiglare angle θ is referred to as a "LCD mode."

The angle of mirror 115 is adjusted by drive mechanism 117. Drive mechanism 117 is now described. Drive mechanism 117 includes actuation supporting point 121 and rod 123. Tips of actuation supporting point 121 and rod 123 are pivotably fit to a lower and an upper part of display unit 113, respectively. Extension and contraction of rod 123 changes the angle of display unit 113, which thereby simultaneously changes the angle of mirror 115 disposed over display screen 113a. Note that, in the embodiment, drive mechanism 117 is configured such that the angle of mirror 115 is changed simultaneously with the angle of display unit 113; however, the mechanism may be configured to change only the angle of mirror 115.

Moreover, in the inside of housing 111, first position detecting switch 125 and second position detecting switch 127 are disposed. First position detecting switch 125 is disposed at a position, as shown in FIG. 2, at which the switch is pushed in the mirror mode to be in the ON state, and not pushed in the LCD mode to be in the OFF state. On the contrary, second position detecting switch 127 is disposed at a position, as shown in FIG. 3, at which the switch is pushed in the LCD mode to be in the ON state, and not pushed in the mirror mode to be in the OFF state. That is, monitoring the ON-OFF state of each of the first and second position detecting switches makes it possible to determine in which mode the angle of mirror 115 is set.

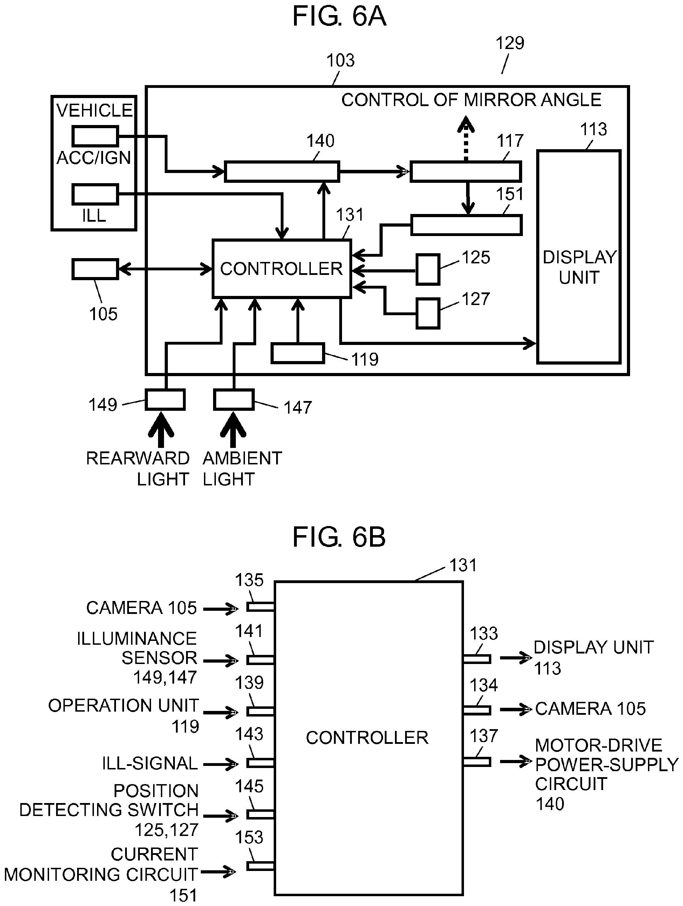

Next, descriptions will be made regarding electronic mirror system 129 that includes electronic mirror apparatus 103 and its peripheral apparatuses, according to the embodiment. FIG. 6A shows the electronic mirror system according to the embodiment. FIG. 6B is a schematic illustration of an input/output configuration of controller 131. Electronic mirror system 129 is controlled by controller 131. Controller 131 is disposed on a circuit board inside display unit 113 of electronic mirror apparatus 103, for example. The controller is an electric circuit configured with a large scale integration (LSI) circuit and the like. It is noted, however, that the location of controller 131 is not necessarily required to be in the inside of housing 111. Instead, the controller may be disposed, as a separate-body controller unit, in the inside of vehicle 101. Moreover, controller 131 may be divided and disposed on a plurality of circuit boards in such a manner that, for example, a part of controller 131 is integrated inside housing 111 of electronic mirror apparatus 103 while another part is integrated in a controller unit disposed outside of housing 111.

Controller 131 includes image-signal output unit 133, image-signal input unit 135, mirror drive-signal output unit 137, and operation-signal input unit 139; these units are electrically coupled with display unit 113, camera 105, motor-drive power-supply circuit 140, and operation unit 119, respectively. Motor-drive power-supply circuit 140 is electrically coupled with a motor (not shown) disposed inside drive mechanism 117. By transmitting and receiving signals via these electric couplings, the controller controls both the ON-OFF switching of display unit 113 and the changing of angle of mirror 115, as described above. In addition, controller 131 further includes camera instruction-signal output unit 134 to output an instruction signal for instructing camera 105 to shoot an image.

Controller 131 further includes sensor-signal input unit 141, illumination-power-line (ILL) -signal input unit 143, and position-detection switch input unit 145. Sensor-signal input unit 141 receives sensor signals which are inputted from illuminance sensors 147 and 149. Based on the sensor signals received by sensor-signal input unit 141, controller 131 determines whether or not illuminance of the light incident from the rearward direction of the vehicle exceeds a threshold value. In the embodiment, sensor-signal input unit 141 is electrically coupled with both forward illuminance sensor 147 for detecting ambient light around vehicle 101 and rearward illuminance sensor 149 for detecting light incident from the rearward direction of vehicle 101. Controller 131 compares the sensor signal from forward illuminance sensor 147 with the sensor signal from rearward illuminance sensor 149. Based on a difference between the compared sensor signals, the controller determines whether or not the illuminance of the light incident from the rearward direction of the vehicle exceeds the threshold value.

Forward illuminance sensor 147 and rearward illuminance sensor 149 may be disposed in either vehicle 101 or electronic mirror apparatus 103. In the embodiment, as shown in FIGS. 4 and 5, forward illuminance sensor 147 and rearward illuminance sensor 149 are disposed on housing 111 of electronic mirror apparatus 103, with forward illuminance sensor 147 being disposed on the rear surface of electronic mirror apparatus 103, with rearward illuminance sensor 149 being disposed on the front surface of electronic mirror apparatus 103.

To ILL-signal input unit 143, an ILL signal is inputted which indicates that headlights mounted in vehicle 101 are switched on. When the ILL signal is ON, controller 131 determines that vehicle 101 is travelling in a dark environment, e.g. at nighttime or in a tunnel. In this way, the operation of controller 131 when the controller determines that vehicle 101 is travelling in a dark environment at nighttime, in a tunnel, or the like is referred to as a "nighttime mode" in the present disclosure. On the contrary, when the ILL signal is OFF, controller 131 determines that vehicle 101 is not travelling in a dark environment, such as at nighttime or in a tunnel (i.e., this means that it is travelling in the daytime, for example). The operation of controller 131 in this case is referred to as a "daytime mode" in the disclosure. In the embodiment, depending on the ILL signal, controller 131 makes the determination of whether to shift to the nighttime mode. However, the determination is not limited to this. For example, the determination may be made depending on the sensor signal from forward illuminance sensor 147.

Position-detection switch input unit 145 is electrically coupled with first position detecting switch 125 and second position detecting switch 127, both described above, to receive signals from the switches, with each of the signals indicating the ON-OFF state of the corresponding switch.

Controller 131 outputs, via mirror drive-signal output unit 137, a mirror drive signal for driving the motor (not shown) disposed inside drive mechanism 117. Moreover, motor-drive power-supply circuit 140 is supplied with power from an accessory (ACC) power supply and an ignition (IGN) power supply of vehicle 101. Drive mechanism 117 is electrically coupled with current monitoring circuit 151. Current monitoring circuit 151 is electrically coupled with current-monitoring input unit 153 of the controller. Current monitoring circuit 151 monitors an electric current flowing in drive mechanism 117. When detecting an abnormal current that flows in drive mechanism 117, current monitoring circuit 151 instructs controller 131 to disable motor-drive power-supply circuit 140. Upon receiving the instructions from current monitoring circuit 151, controller 131 instructs motor-drive power-supply circuit 140 to halt the power supply to the motor in drive mechanism 117.

Next, operations of electronic mirror apparatus 103 and electronic mirror system 129, both according to the embodiment, will be described. In electronic mirror apparatus 103 according to the embodiment, when display unit 113 is OFF and controller 131 is in a nighttime mode, the controller monitors illuminance of light incident from the rearward direction of the vehicle. When the illuminance of the light incident from the rearward direction exceeds a threshold value, controller 131 instructs drive mechanism 117 to adjusts the angle of the mirror to antiglare angle θ, and also instructs display unit 113 to display an image on display screen 113a, with luminance of the image being regulated in response to the illuminance of the light incident from the rearward direction. This configuration allows the driver to see a clear view without being dazzled, when vehicle 101 is travelling in a dark ambient environment, e.g. at nighttime or in a tunnel, and the vehicle is irradiated with intense light coming from headlights and the like of a following vehicle.

That is, in the nighttime mode, upon detecting irradiation with the intense light coming from the headlights and the like of the following vehicle, controller 131 shifts electronic mirror apparatus 103 to the LCD mode, thereby providing a rear view with display unit 113. This operation causes the intense light coming from the following vehicle not to be reflected in the rearview mirror, when viewed from the driver. In addition, the image displayed on display screen 113a of display unit 113 is regulated in response to the illuminance of the light incident from the rearward direction of the vehicle. This achieves an antiglare function of reducing glare by which the driver is dazzled.

Here, some methods are known for regulating the luminance of the image displayed on display screen 113a in response to the illuminance of the light incident from the rearward direction of the vehicle. One of the methods includes adjusting an iris of camera 105 to reduce the luminance of the image itself that is shot with camera 105. Another one includes reducing the amount of light of an LCD backlight used in display unit 113 to reduce the luminance of the image displayed on display screen 113a. By the way, in order to regulate the luminance of the image, it is necessary to measure the illuminance of the light incident from the rearward direction of the vehicle. Such a measurement may be made by using an illuminance sensor (not shown) disposed in camera 105 or, alternatively, by using either the sensor signal of forward illuminance sensor 147 or the sensor signal of rearward illuminance sensor 149. That is, the illuminance sensor used in determining whether to shift to the LCD mode may be either the same one as or different one from that used in adjusting the luminance of the image to be displayed.

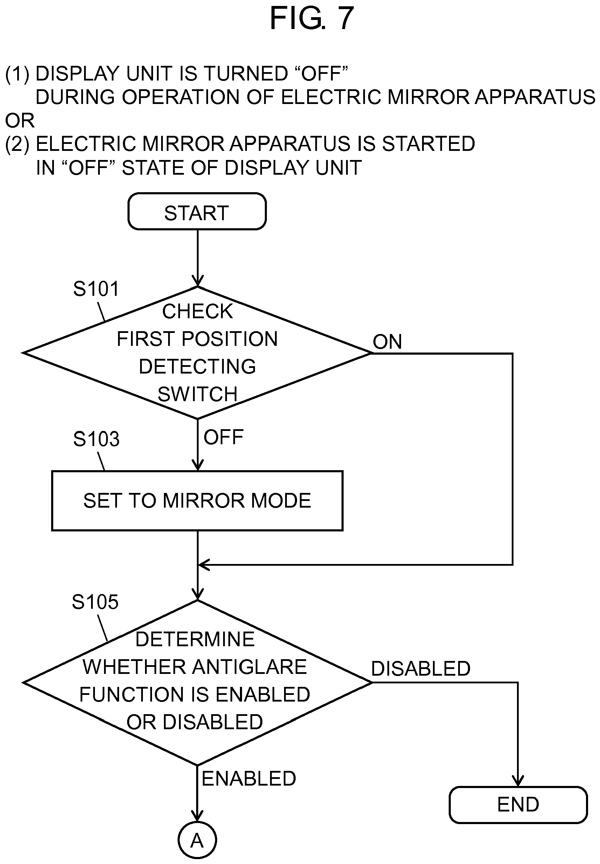

Next, by using flowcharts shown in FIGS. 7 to 11, the operations of electronic mirror apparatus 103 and electronic mirror system 129, both according to the embodiment, will be described in more detail.

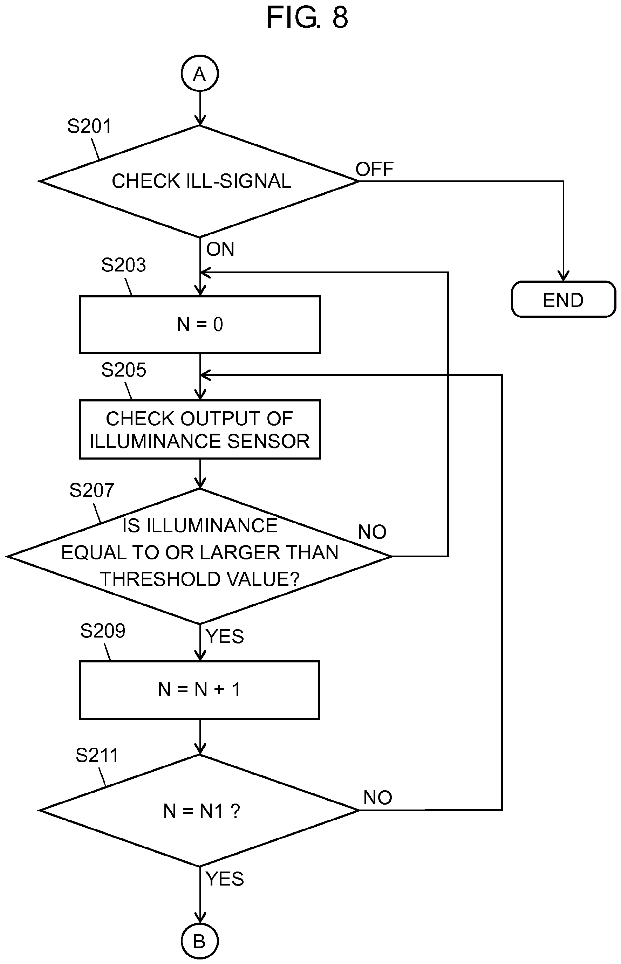

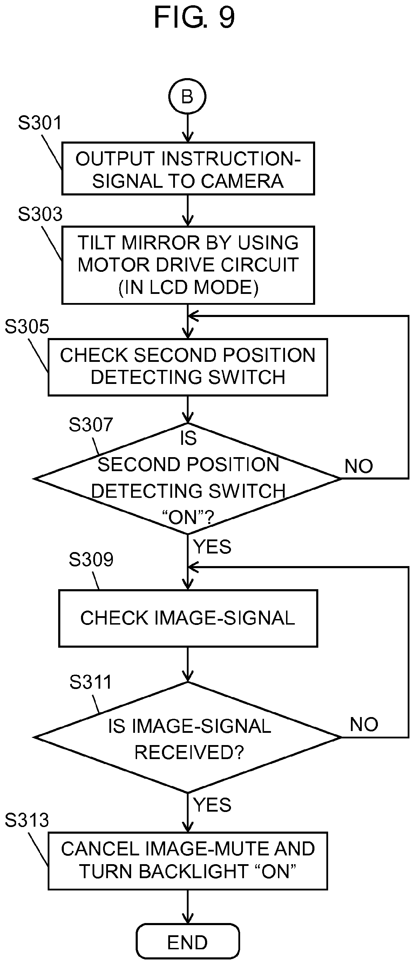

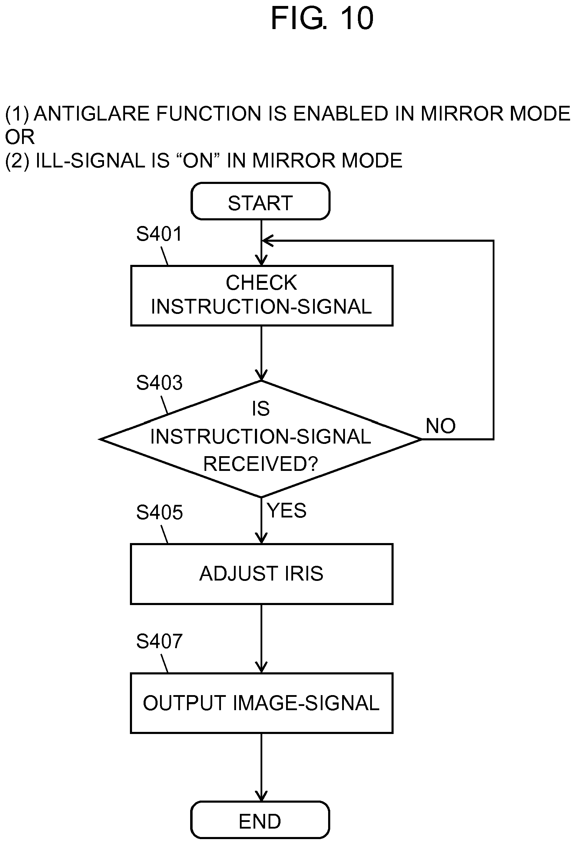

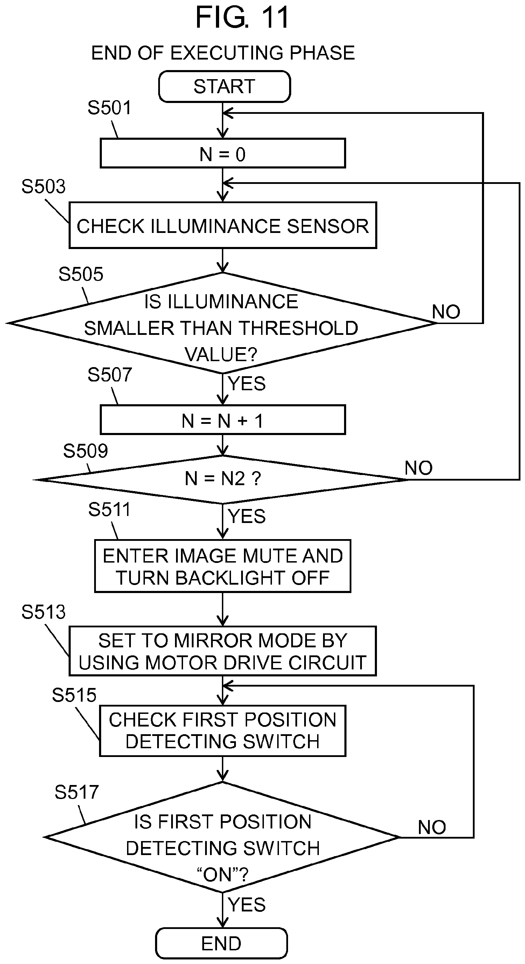

Here, the description is divided into some parts, that is, the parts regarding FIG. 7 (Starting Phase), FIG. 8 (Determining Phase), FIG. 9 (Executing Phase), FIG. 10 (Operation of Camera), and FIG. 11 (Ending Phase).

### Starting Phase

Operations in the Starting Phase are shown in FIG. 7. The Starting Phase starts (1) when the driver turns display unit 113 from ON to OFF during operation of electronic mirror apparatus 103, or (2) when electronic mirror apparatus 103 is started up in the state of display unit 113 being OFF. First, controller 131 checks the state of first position detecting switch 125 (S101). If first position detecting switch 125 is ON, the process proceeds to S105. In S105, controller 131 checks whether the antiglare function is enabled or disabled. The antiglare function can be switched between the enabled and disabled states, through use of one of the operation buttons disposed in operation unit 119. When the antiglare function has been switched to the enabled state, the process proceeds to next Determining Phase (A). When the antiglare function has been switched to the disabled state, the controller determines that the driver wants to check the situation in the rearward direction by using mirror 115. Then, the controller ends the starting operation.

In S101, if first position detecting switch 125 is OFF, controller 131 causes drive mechanism 117 to set mirror 115 to be in the mirror mode (S103). After that, the process proceeds to S105.

### Determining Phase

Next, operations in the Determining Phase are shown in FIG. 8. Upon determining that the antiglare function is ON, controller 131 checks an ILL signal (S201). If the ILL signal is OFF, controller 131 determines that vehicle 101 is not travelling in a dark ambient environment, and then ends the determining operation without shifting to the nighttime mode.

In contrast, if the ILL signal is ON, the controller shifts to the nighttime mode. In the nighttime mode, first, numerical value "N" stored in a memory in controller 131 is reset to N = 0 (zero) (S203). Next, the controller checks the output of the illuminance sensor (S205), and then determines whether or not the illuminance of the light incident from the rearward direction of the vehicle is equal to or larger than the threshold value (S207). When the illuminance is determined to be smaller than the threshold value in S207, the process returns to S203 and resets value "N." When the illuminance is determined to be equal to or larger than the threshold value in S207, the controller replaces value "N" with N = N + 1 (S209), and then determines whether or not "N" has reached specified value N1 (S211). In S211, if value "N" is smaller than N1, the process returns to S205. If value "N" is equal to N1, the process proceeds to Executing Phase (B). That is, in the Determining Phase of the embodiment, only in the case where the illuminance of the light is consecutively determined N1-times to be equal to or larger than the threshold value, the process is allowed to proceed to the Executing Phase of the antiglare function, as specified.

### Executing Phase

Then, operations of the Executing Phase are shown in FIG. 9. First, controller 131 outputs an instruction signal to instruct camera 105 to shoot an image (S301). Next, the controller causes drive mechanism 117 to set the angle of mirror 115 equal to antiglare angle θ (LCD mode) (S303). Then, the controller checks the state of second position detecting switch 127 (S305 and S307). Upon determining that second position detecting switch 127 is turned ON, controller 131 then determines whether or not the controller has received an image signal transmitted from camera 105 (S309 and S311). Upon receiving the image signal transmitted from camera 105, the controller cancels an Image-Mute mode, turns the backlight of LCD display unit 113 ON, and displays an image on display screen 113a based on the image signal transmitted from camera 105 (S313).

### Operation of Camera

FIG. 10 is the flowchart of operations on the camera 105 side. A string of the operations shown in FIG. 10 starts, upon receiving information that the power supply of camera 105 is turned ON. The power supply of the camera is usually OFF in the mirror mode. The power supply is turned ON (1) when the antiglare function is enabled in the mirror mode, or (2) when the ILL signal is ON in the mirror mode. Upon being turned ON, camera 105 waits to receive an instruction signal from controller 131 (S401 and S403). Upon receiving the instruction signal from controller 131, camera 105 adjusts its iris in accordance with the illuminance of the light incident from the rearward direction of the vehicle, and then shoots an image. The camera transmits the thus-shot image, as an image signal, to controller 131 (S405 and S407).

As described above, electronic mirror apparatus 103 according to the embodiment can feature the following advantage. That is, in the state of being set in the mirror mode at nighttime and the intense light comes from the rearward direction of the vehicle, the apparatus instantaneously adjusts the angle of mirror 115 to antiglare angle θ (LCD mode), thereby reducing the glare by which the driver is dazzled.

Moreover, the configuration is such that, while controller 131 is causing drive mechanism 117 to change the angle of mirror 115, camera 105 can prepare the image that is shot via the appropriately adjusted iris. This results in the appropriate regulation in luminance of the image displayed on display screen 113a in S313, in response to the illuminance of the light incident from the rearward direction of the vehicle. Therefore, the image, the luminance of which has been appropriately regulated, can be displayed immediately after electronic mirror apparatus 103 has shifted to the LCD mode.

Moreover, the image based on the image signal fed from camera 105 is allowed to be displayed only after the completion of shifting to the LCD mode. This procedure can prevent an image, which is disturbed by flickering and the like, from being displayed during the operation of drive mechanism 117.

In the manner described above, the antiglare function according to the embodiment is executed.

### Ending Phase

Next, operations of the Ending Phase are shown in FIG. 11. The Ending Phase starts only after the Executing Phase in FIG. 10 has been completed. In the Ending Phase, value "N" is reset again to N = 0 (zero) (S501). Next, the controller checks the output of the illuminance sensor (S503), and then determines whether or not the illuminance of the light incident from the rearward direction of the vehicle is smaller than the threshold value (S505). When the illuminance is determined to be equal to or larger than the threshold value in S505, the process returns to S501 and resets value "N." When the illuminance is determined to be smaller than the threshold value in S505, the controller replaces value "N" with N = N + 1 (S507), and then determines whether or not "N" has reached specified value N2 (S509). In S509, if value "N" is smaller than N2, the process returns to S503. If value "N" is equal to N2, the controller enters the Image-Mute mode and turns LCD display unit 113 OFF (S511). That is, in the Ending Phase of the embodiment, only in the case where the illuminance of the light is consecutively determined N2-times to be smaller than the threshold value, the process is allowed to end the antiglare function, as specified. After S511, drive mechanism 117 changes the angle of mirror 115 to be in the mirror mode and turns first position detecting switch 125 ON. This completes the Ending Phase (S513 to S517).

Here, in the embodiment, a relation between specified value N2 used in determining whether to end the antiglare function and specified value N1 used in determining whether to execute the antiglare function is set such that N2 > N1. This relation means that, in the case where the output of the illuminance sensor is determined at predetermined time intervals, the time required for determination is longer in determining whether to end the function than in determining whether to execute the function. This relation is aimed at preventing excessively frequent ON-OFF switching of the antiglare function while the vehicle is travelling in an environment in which the luminosity of ambient light around the vehicle varies very frequently, for example, in a tunnel, in an urban area, or in the like. For example, in determining whether to execute the antiglare function in S205 to S211 of FIG. 8, the process proceeds to the next Executing Phase when the output for the light incident from the rearward direction of the vehicle is not smaller than the threshold value for a period not shorter than a first determination time (e.g. 0.3 s). In contrast to this, in determining whether to end the antiglare function in S503 to S509 of FIG. 11, the antiglare function is ended when the output for the light incident from the rearward direction of the vehicle is smaller than the threshold value for a period not shorter than a second determination time (e.g. 3 s). In this way, the relation between the execution and the ending of the antiglare function exhibits a hysteresis phenomenon, which can prevent the antiglare function from being ON-OFF switched very frequently.

As mentioned above, the embodiment that is one aspect of the present invention has been described.

### INDUSTRIAL APPLICABILITY

The technology according to the present invention can be applied to electronic mirror apparatuses each of which is mounted in a vehicle such as an automobile, for providing a driver with a rear view.

### REFERENCE MARKS IN THE DRAWINGS

- 101: vehicle
- 103: electronic mirror apparatus
- 105: camera
- 107: windshield
- 109: mounting arm
- 111: housing
- 113: display unit
- 113a: display screen
- 115: mirror
- 117: drive mechanism
- 119: operation unit
- 121: actuation supporting point
- 123: rod
- 125: first position detecting switch
- 127: second position detecting switch
- 129: electronic mirror system
- 131: controller
- 133: image-signal output unit
- 134: camera instruction-signal output unit
- 135: image-signal input unit
- 137: mirror drive-signal output unit
- 139: operation-signal input unit
- 140: motor-drive power-supply circuit
- 141: sensor-signal input unit
- 143: ILL-signal input unit
- 145: position-detection switch input unit
- 147: forward illuminance sensor
- 149: rearward illuminance sensor
- 151: current monitoring circuit
- 153: current-monitoring input unit

## Claims

1. An electronic mirror apparatus (103) to be mounted in a vehicle (101), for providing a driver of the vehicle (101) with a rear view, the electronic mirror apparatus (103) comprising:
a display unit (113) including a display screen (113a);
a mirror (115) disposed over the display screen (113a);
a drive mechanism (117) for changing an angle of the mirror (115); and
a controller (131) electrically coupled with the display unit (113), the drive mechanism (117), an illuminance sensor (149) for monitoring illuminance of light incident from the rearward direction of the vehicle (101), and a camera (105) for shooting an image in the rearward direction of the vehicle (101),
wherein the controller (131) monitors the illuminance of the light incident from the rearward direction of the vehicle (101) based on an output from the illuminance sensor (149) when the display unit (113) is in an OFF state and the vehicle (101) is in a dark environment,
**characterized in that**
the controller (131) instructs the drive mechanism (117) to adjust the angle of the mirror (115) to an antiglare angle and also instructs the display unit (113) to display the image shot by the camera (105) and being regulated in luminance when the illuminance of the light incident from the rearward direction of the vehicle (101) becomes equal to or larger than a threshold value.

2. The electronic mirror apparatus (103) according to claim 1,
wherein the controller (131) instructs the drive mechanism (117) to adjust the angle of the mirror (115) after the illuminance of the light incident from the rearward direction of the vehicle (101) has become equal to or larger than the threshold value continuously for a first determination time period.

3. The electronic mirror apparatus (103) according to claim 2,
wherein the controller (131) instructs the display unit (113) to stop displaying the image and also instructs the drive mechanism (117) to return the angle of the mirror (115) to an initial position after the illuminance of the light incident from the rearward direction of the vehicle (101) has become smaller than the threshold value continuously for a second determination time period longer than the first determination time period,

4. The electronic mirror apparatus (103) according to claim 1,
wherein the controller (131) instructs the camera (105) to shoot the image after the illuminance of the light incident from the rearward direction of the vehicle (101) has become equal to or larger than the threshold value, and
the controller (131) instructs the display unit (113) to display the image based on an image signal transmitted from the camera (105) after the drive mechanism (117) has finished adjusting the angle of the mirror (115).

5. An electronic mirror system (129) comprising:
the electronic mirror apparatus (103) according to any one of claims 1 to 4;
the camera (105); and
the illuminance sensor (149).

6. The electronic mirror system (129) according to claim 5,
wherein the controller (131) instructs the camera (105) to shoot the image after the illuminance of the light incident from the rearward direction of the vehicle (101) has become equal to or larger than the threshold value,
the camera (105) adjusts an iris in accordance with the illuminance of the light incident from the rearward direction of the vehicle (101) and then shoots the image when the camera (105) is instructed to shoot the image, and
the controller (131) acquires, from the camera (105), an image signal of the image shot via the adjusted iris and then instructs the display unit (113) to display the image based on the image signal after the drive mechanism (117) has finished adjusting the angle of the mirror (115).

## Patentansprüche

1. Elektronische Spiegelvorrichtung (103), die in einem Fahrzeug (101) montiert werden soll, zum Bereitstellen einer rückwärtigen Blickrichtung für einen Fahrer des Fahrzeugs (101), wobei die elektronische Spiegelvorrichtung (103) enthält:
eine Anzeigeeinheit (113), die einen Bildschirm (113a) enthält;
einen Spiegel (115), der oberhalb des Bildschirms (113a) angeordnet ist;
einen Antriebsmechanismus (117) zum Ändern eines Winkels des Spiegels (115); und
eine Steuereinheit (131), die elektrisch mit der Anzeigeeinheit (113), dem Antriebsmechanismus (117), einem Belichtungssensor (149) zum Überwachen einer Belichtung mit Licht, das aus der rückwärtigen Richtung des Fahrzeugs (101) einfällt, und einer Kamera (105) zum Aufnehmen eines Bilds in der rückwärtigen Richtung des Fahrzeugs (101) gekoppelt ist,
wobei die Steuereinheit (131) die Belichtung mit dem aus der rückwärtigen Richtung des Fahrzeugs (101) einfallenden Licht basierend auf einer Ausgabe aus dem Belichtungssensor (549) überwacht, wenn die Anzeigeeinheit (113) sich in einem AUSZustand befindet und das Fahrzeug (101) sich in einer dunklen Umgebung befindet,
**dadurch gekennzeichnet, dass**
die Steuereinheit (131) den Antriebsmechanismus (117) anweist, den Winkel des Spiegels (115) auf einen blendfreien Winkel einzustellen und auch die Anzeigeeinheit (113) anweist, das von der Kamera (105) aufgenommene und bezüglich der Belichtung geregeltes Bild anzuzeigen, wenn die Belichtung mit dem aus der rückwärtigen Richtung des Fahrzeugs (101) einfallenden Licht gleich einem Schwellwert oder größer als der Schwellwert wird.

2. Elektronische Spiegelvorrichtung (103) gemäß Anspruch 1,
bei der die Steuereinheit (131) den Antriebsmechanismus (117) anweist, den Winkel des Spiegels einzustellen, nachdem die Belichtung mit dem aus der rückwärtigen Richtung des Fahrzeugs (101) einfallenden Licht kontinuierlich eine erste Ermittlungszeitdauer lang gleich dem oder größer als der Schwellwert geworden ist.

3. Elektronische Spiegelvorrichtung (103) gemäß Anspruch 2,
bei der Steuereinheit (131) die Anzeigeeinheit (113) anweist, das Anzeigen des Bilds zu beenden und auch den Antriebsmechanismus (117) anweist, den Winkel des Spiegels (115) in eine Ausgangsposition zurückzustellen, nachdem die Belichtung mit dem aus der rückwärtigen Richtung des Fahrzeugs (101) einfallenden Licht kontinuierlich für eine zweite Ermittlungszeitdauer, die länger als die erste Ermittlungszeitdauer ist, kleiner als der Schwellwert geworden ist.

4. Elektronische Spiegelvorrichtung (103) gemäß Anspruch 1,
bei der die Steuereinheit (131) die Kamera (105) anweist, das Bild aufzunehmen, nachdem die Belichtung mit dem aus der rückwärtigen Richtung des Fahrzeugs (101) einfallenden Licht gleich dem oder größer als der Schwellwert geworden ist, und
die Steuereinheit (131) die Anzeigeeinheit (113) anweist, das Bild basierend auf einem von der Kamera (105) übertragenen Bildsignal anzuzeigen, nachdem der Antriebsmechanismus (117) das Einstellen des Winkels des Spiegels (115) beendet hat.

5. Elektronisches Spiegelsystem (129), umfassend:
die elektronische Spiegelvorrichtung (103) gemäß irgendeinem der Ansprüche 1 bis 4;
die Kamera (105); und
den Belichtungssensor (149).

6. Elektronisches Spiegelsystem (129) gemäß Anspruch 5,
bei dem die Steuereinheit (131) die Kamera (105) anweist, das Bild aufzunehmen, nachdem die Belichtung mit dem aus der rückwärtigen Richtung des Fahrzeugs (101) einfallenden Licht gleich dem oder größer als der Schwellwert geworden ist,
die Kamera (105) eine Irisblende gemäß der Belichtung mit dem aus der rückwärtigen Richtung des Fahrzeugs (101) einfallenden Licht einstellt und dann das Bild aufnimmt, wenn die Kamera (105) angewiesen wird, das Bild aufzunehmen, und
die Steuereinheit (131) von der Kamera (105) ein Bildsignal des durch die eingestellte Irisblende aufgenommenen Bilds erhält und dann die Anzeigeeinheit (113) anweist, das Bild basierend auf dem Bildsignal anzuzeigen, nachdem der Einstellmechanismus (117) das Einstellen des Winkels des Spiegels (115) beendet hat.

## Revendications

1. Appareil de miroir électronique (103) à monter dans un véhicule (101), destiné à fournir à un conducteur du véhicule (101) une vue arrière, l'appareil de miroir électronique (103) comprenant :
une unité d'affichage (113) comprenant un écran d'affichage (113a) ;
un miroir (115) disposé au-dessus de l'écran d'affichage (113a) ;
un mécanisme d'entraînement (117) destiné à changer un angle du miroir (115) ; et
un dispositif de commande (131) couplé électriquement à l'unité d'affichage (113), le mécanisme d'entraînement (117), un capteur d'éclairage (149) destiné à surveiller l'éclairage de la lumière incidente depuis la direction arrière du véhicule (101) et un appareil de prise de vues (105) destiné à prendre une image dans le sens arrière du véhicule (101),
le dispositif de commande (131) surveillant l'éclairement de la lumière incidente depuis le sens arrière du véhicule (101) en fonction d'une sortie provenant du capteur d'éclairage (149) lorsque l'unité d'affichage (113) est dans un état éteint (« OFF ») et le véhicule (101) se trouve dans un environnement sombre,
**caractérisé en ce que**
le dispositif de commande (131) donne l'instruction au mécanisme d'entraînement (117) d'ajuster l'angle du miroir (115) à un angle de protection contre l'éblouissement et donne également l'instruction à l'unité d'affichage (113) d'afficher l'image prise par l'appareil de prise de vues (105) et étant régulée en éclairement lorsque l'éclairement de la lumière incidente depuis le sens arrière du véhicule (101) devient égal ou supérieur à une valeur seuil.

2. Appareil de miroir électronique (103) selon la revendication 1,
dans lequel le dispositif de commande (131) donne l'instruction au mécanisme d'entraînement (117) d'ajuster l'angle du miroir (115) après que l'éclairement de la lumière incidente depuis le sens arrière du véhicule (101) est devenue égal ou supérieur à la valeur seuil en continu pendant une première période de temps de détermination.

3. Appareil de miroir électronique (103) selon la revendication 2,
dans lequel le dispositif de commande (131) donne l'instruction à l'unité d'affichage (113) d'arrêter l'affichage de l'image et donne également l'instruction au mécanisme d'entraînement (117) de retourner l'angle du miroir (115) vers une position initiale après que l'éclairement de la lumière incidente depuis un sens arrière du véhicule (101) est devenu inférieur à la valeur seuil en continu pendant une deuxième période de temps de détermination plus longue que la première période de temps de détermination.

4. Appareil de miroir électronique (103) selon la revendication 1,
dans lequel le dispositif de commande (131) donne l'instruction à l'appareil de prise de vues (105) de prendre l'image après que l'éclairement de la lumière incidente depuis le sens arrière du véhicule (101) est devenu égal ou supérieur à la valeur seuil, et
le dispositif de commande (131) donne l'instruction à l'unité d'affichage (113) d'afficher l'image en fonction d'un signal d'image transmis depuis l'appareil de prise de vues (105) après que le mécanisme d'entraînement (117) a fini d'ajuster l'angle du miroir (115).

5. Système de miroir électronique (129) comprenant :
l'appareil de miroir électronique (103) selon l'une quelconque des revendications 1 à 4 ;
l'appareil de prise de vues (105) ; et
le capteur d'éclairage (149).

6. Appareil de miroir électronique (129) selon la revendication 5,
dans lequel le dispositif de commande (131) donne l'instruction à l'appareil de prise de vues (105) de prendre l'image après que l'éclairement de la lumière incidente depuis le sens arrière du véhicule (101) est devenu égal ou supérieur à la valeur seuil,
l'appareil de prise de vues (105) ajuste un iris conformément à l'éclairement de la lumière incidente depuis le sens arrière du véhicule (101) et puis prend l'image lorsque l'appareil de prise de vues (105) reçoit l'instruction de prendre l'image, et
le dispositif de commande (131) acquiert, depuis l'appareil de prise de vues (105), un signal d'image de l'image prise par le biais de l'iris ajusté et puis donne l'instruction à l'unité d'affichage (113) d'afficher l'image en fonction du signal d'image après que le mécanisme d'entraînement (117) a fini d'ajuster l'angle du miroir (115).
